# EUROPEAN PATENT SPECIFICATION

(11) **EP 4 287 141 B1**
(45) Date of publication and mention of the grant of the patent: **15.04.2026**
(21) Application number: 22176195.0
(22) Date of filing: 30.05.2022
(51) Int. Cl.: G06V 10/82, G06V 20/56, G06V 10/80

(54) **SENSOR VIRTUALIZATION**
SENSORVIRTUALISIERUNG
VIRTUALISATION DE CAPTEUR

(43) Date of publication of application: 06.12.2023
(73) Proprietor: aiMotive Kft., 1025 Budapest (HU)
(72) Inventor: MATUSZKA, Tamás, 1063 Budapest (HU); KISHONTI, László Norbert, 1026 Budapest (HU)
(74) Representative: Hofmann, Matthias

(56) References cited:
- US-A1- 2020 301 799
- CHEN YIQIANG ET AL: "Cross-modal Matching CNN for Autonomous Driving Sensor Data Monitoring", 2021 IEEE/CVF INTERNATIONAL CONFERENCE ON COMPUTER VISION WORKSHOPS (ICCVW), IEEE, 11 October 2021 (2021-10-11), pages 3103 - 3112, XP034027689, [retrieved on 20211108], DOI: 10.1109/ICCVW54120.2021.00346
- LIMEIRA MARCELO ET AL: "DepthLiDAR: Active Segmentation of Environment Depth Map Into Mobile Sensors", IEEE SENSORS JOURNAL, IEEE, USA, vol. 21, no. 17, 9 June 2021 (2021-06-09), pages 19047 - 19057, XP011875803, ISSN: 1530-437X, [retrieved on 20210830], DOI: 10.1109/JSEN.2021.3088007

## Description

### TECHNICAL FIELD

The present invention relates to a method for training a neural network to predict objects in a surrounding of a vehicle and a system for training a neural network to predict objects in a surrounding of a vehicle, wherein the system is configured to carry out the method of one of the previous claims.

The present invention also relates to a computer-readable storage medium storing program code, the program code comprising instructions for carrying out such a method.

### BACKGROUND

A crucial ingredient of autonomous driving is the ability to build a 360-degree environment model. The environment model can be obtained by utilizing different sensor modalities. However, this involves training different models for each sensor setup. Unfortunately, this solution is not scalable concerning time and expenses (e.g., training data collection, annotation, neural network modeling, and training). Therefore, a unified training method is required to overcome the above-mentioned limitations.

CHEN YIQIANG ET AL: "Cross-modal Matching CNN for Autonomous Driving Sensor Data Monitoring" IEEE/CVF INTERNATIONAL CONFERENCE ON COMPUTER VISION WORKSHOPS (ICCVW), IEEE, 11 October 2021 (2021-10-11), pages 3103-3112, discloses cross-modal Convolutional Neural Networks (CNN) for autonomous driving sensor data monitoring functions, such as fault detection and online data quality assessment.

### SUMMARY OF THE INVENTION

The objective of the present invention is to provide a method for training a neural network to predict objects in a surrounding of a vehicle and a system for training a neural network to predict objects in a surrounding of a vehicle, wherein the system is configured to carry out the method of one of the previous claims, which overcome one or more of the above-mentioned problems of the prior art.

A first aspect of the invention provides a method for training a neural network to predict objects in a surrounding of a vehicle to compensate for a lack of physical sensor data or to transform physical sensor data, the method comprising:
- obtaining the physical sensor data from physical sensors having one or more modalities,
- performing a first mapping from the physical sensor data to one or more virtual sensors to obtain virtual sensor data,
- performing a second mapping from the virtual sensor data to a 3D model space comprising a bird's eye view raster, and
- training the neural network based on the virtual sensor data and one or more annotations in the 3D model space

The method of the first aspect has the advantage that a sensor-agnostic perception setup is used. Thus, training data that has been acquired using different physical sensors can be combined.

Preferably, the physical sensors have at least two modalities. Also, the physical sensors may comprise at least one sensor whose sensor data is not directly acquired in the 3D model space.

The training of the neural network can be performed e.g. based on ground truth training data which comprises the annotations. The annotations are not limited herein, i.e., they may be properties of objects, an objectness score, and/or other predictions that are not directly related to one or more objects.

In a first implementation of the method according to the first aspect, the method further comprises obtaining training data using a fleet of vehicles, wherein the fleet uses different physical sensors.

Since all physical sensor data from the fleet of vehicles is mapped to the virtual sensor data (which preferably reflects the same virtual sensors), uniform training can be performed, even though the originally acquired sensor data is non-uniform. For example, the physical sensors may differ in localization on the vehicle, field-of-view, range, and/or many other acquisition parameters. These differences can be compensated through the first mapping, which in effect can modify the physical sensor data of the multiple different physical sensor such that the corresponding virtual sensor data have characteristics as if acquired with one uniform virtual sensor (or group of virtual sensors, e.g. corresponding to different modalities).

Performing virtualization of several modalities, e.g. having at least two virtual sensors corresponding to at least two virtual modalities, has proven particularly useful in experiments.

The fleet of vehicles preferably comprises at least 10 vehicles, in particular at least 100 or 1.000 vehicles or more preferably at least 10.000 vehicles.

In a further implementation of the method according to the first aspect, the performing the first mapping comprises applying a transformation from the physical sensor data to obtain the virtual sensor data, wherein the transformation is based on a difference between actual physical characteristics of the physical sensors and virtual physical characteristics of the virtual sensors.

For example, the physical sensors might comprise one or more cameras with a given first focal length, whereas the virtual sensors might comprise one or more cameras with a second focal length, different from the first focal length. Thus, a mathematical transformation can be used to transform the physical sensor data to the virtual sensor data. In other words, the virtual sensor data then appear as if they had been acquired with a camera with the second focal length. Thus, a fleet of vehicles may use cameras with different focal length, yet all acquired data will be available as virtual sensor data with the common second focal length.

The 3D model space comprises a bird's eye view raster. This has the advantage that many annotations can be estimated better based on a 3D model space that is a bird's eye view raster.

In a further implementation of the method according to the first aspect, the performing the second mapping comprises that if a failure of a first sensor of the physical sensors is detected, the method comprises filling in using virtual sensor data that is obtained from a second sensor of the physical sensors, wherein the first and second sensor use different modalities.

This has the advantage that the method can compensate for the failure of one or more physical sensors, thus greatly improving the reliability of the method in practical application. For example, in autonomous driving it must be ensured that a vehicle can still navigate securely even if one of the cameras is blocked, e.g. by dirt on the lens of the camera.

The filling in of missing data can be performed as follows. Since different modalities are mapped onto the model space, overlapping observations (feature maps) can be stored within the neural network from different sensor modalities. This provides sufficient redundancy in the case of a sensor drop (i.e. one of the sensors fails to provide a signal for a specific timestamp). For example, in time t the front camera fails to provide camera observation, but the long-range lidar is operating properly. In this case, the feature maps corresponding to the camera in front of the ego car in model space would be empty, causing no detections without additional sensor modalities. However, lidar-provided observations (feature maps) are stored within the neural network which makes it possible to detect objects even though the camera observation was corrupted.

In a further implementation of the method according to the first aspect, the virtual sensors consist of one virtual sensor for each virtual modality.

In other words, in this implementation there is only one virtual sensor for each virtual modality. Experiments have shown that this mapping to one virtual sensor for each (virtual) modality simplifies the training data and better training results can be obtained.

In a further implementation of the method according to the first aspect, the method further comprises a step of training parameters of an encoder and a decoder of a transformer model, wherein the encoder maps from the virtual sensor data to a latent space, and the decoder maps from the latent space to the 3D model space.

This has the advantage that even for modalities where no clearly defined mathematical transformation from the virtual sensor data of this modality to the 3D model space is available, the mapping can be efficiently learned from training data. Experiments have shown that transformer models can yield good results for mapping from the virtual sensor data to the 3D model space.

In a further implementation of the method according to the first aspect, the neural network comprises a feature mapping sub-network that maps from the virtual sensor data to a feature map in the 3D model space, and a processing head that maps from the feature map to an annotation space.

In this implementation, the feature map in 3D model space is an intermediate result that is then used by the processing head to determine the annotations in annotation space. Experiments have shown that this setup yields superior results.

It is understood that in this implementation the annotation space can comprise annotations such as object labels and/or (non-)presence of an object, however, there is no limitation on the kind of used annotations. In particular, they could also comprise scalar and/or vector values.

In a further implementation of the method according to the first aspect, the feature map comprises a feature sub-map in the 3D model space for each of the at least two modalities, wherein preferably each feature sub-map feeds into the processing head.

For example, there can be a first feature sub-map for the camera data, a second feature sub-map for the Lidar data and a third feature sub-map for the radar data. Each of the feature sub-maps may comprise a plurality of values for each position in the 3D model space. The entire feature map can be considered stored in one large tensor.

In a further implementation of the method according to the first aspect, the one or more annotations comprise a presence of an object and/or a label of an object. Predictions can also comprise a objectness score, e.g., a probability of an object being present at a given location in the 3D model space. The label of the object can include e.g. a pedestrian label, a road label, a vehicle label, and so on.

In a further implementation of the method according to the first aspect, the method further comprises performing a fusion between the at least two modalities in the 3D model space. A light-weight convolutional neural network can be used to perform this mapping.

In a further implementation of the method according to the first aspect, the training the neural network comprises training the neural network multiple times, where at least during one training data from one or more of the virtual sensors and/or the physical sensors is omitted.

This implementation has the advantage that a robustness of the trained neural network is improved.

In a further implementation of the method of the first aspect, the first mapping comprises one or more first parameters, the second map-ping comprises one or more second parameters, and a processing head for obtaining one or more annotations comprises one or more third parameters, wherein the training the neural network comprises end-to-end training to obtain the first, second and third parameters.

The end-to-end training of all parameters has the advantage that merely sufficient training data need to be acquired and all relevant parameters of the entire system can then be automatically determined.

A further aspect of the present invention refers to a system for training a neural network to predict objects in a surrounding of a vehicle, wherein the system is configured to carry out the method of the first aspect or one of the implementations of the first aspect. The system can be implemented e.g. on a server, in particular a plurality of servers or in the cloud. The system can be configured to continuously receive new training data, e.g. from a fleet of vehicles that may be connected to the system.

A further aspect of the invention refers to a computer-readable storage medium storing program code, the program code comprising instructions that when executed by a processor carry out the method of the second aspect or one of the implementations of the second aspect.

### BRIEF DESCRIPTION OF THE DRAWINGS

To illustrate the technical features of embodiments of the present invention more clearly, the accompanying drawings provided for describing the embodiments are introduced briefly in the following. The accompanying drawings in the following description are merely some embodiments of the present invention, modifications on these embodiments are possible without departing from the scope of the present invention as defined in the claims.
- FIG. 1: is a flow chart of a method in accordance with an embodiment of the present disclosure,
- FIG. 2: is a block diagram that illustrates a first mapping from physical sensors to virtual sensor data, in accordance with an embodiment of the present disclosure,
- FIG. 3: is a block diagram that illustrates a second mapping, from virtual sensor data to feature maps in 3D model space, in accordance with an embodiment of the present disclosure, and
- FIG. 4: is a flow chart of processing feature maps, e.g. feature maps as determined by the system of FIG. 3, in accordance with an embodiment of the present disclosure.

### DETAILED DESCRIPTION OF EMBODIMENTS

The foregoing descriptions are only implementation manners of the present invention, the scope of the present invention is not limited to this. Any variations or replacements can be easily made through person skilled in the art. Therefore, the protection scope of the present invention should be subject to the protection scope of the attached claims.

Neural networks trained for 3D perception tasks are sensitive to the input sensors since they can implicitly learn the intrinsic properties of a specific sensor. For example, when a neural network is utilized to detect objects on a camera stream that has been recorded with different focal lengths than the network was trained, the depth estimations typically have a noticeable error due to the camera intrinsic mismatch.

Embodiments of the present invention solve this problem by defining reference virtual sensors and mapping real sensors onto these virtual sensors. Preferably, the virtual sensors reflect different physical characteristics than at least one of the physical sensors.

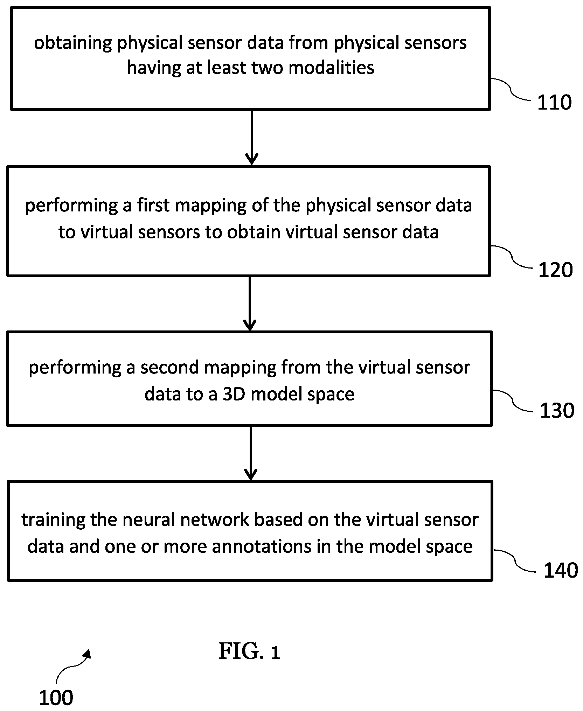

FIG. 1 is a flow chart of a method 100 in accordance with the present invention. The method is used for training a neural network to predict objects in a surrounding of a vehicle. For example, the vehicle can be a (semi or fully) autonomous vehicle.

The method comprises a first step 110 obtaining physical sensor data from physical sensors having at least two modalities. For example, the physical sensors can comprise a camera and a lidar or radar sensor. In other embodiments, there may be only one modality.

The method comprises a second step 120 of performing a first mapping of the physical sensor data to virtual sensors to obtain virtual sensor data. For example, the images (video stream) from the camera can be mapped to obtain virtual images (a virtual video stream) and the lidar and/or radar data can be mapped to obtain virtual lidar and/or virtual radar data. The mapping of the camera data can be based on a difference between the actual physical characteristics of the camera and virtual physical characteristics of a virtual camera. Similarly, the mapping of the data acquired by the lidar or radar can be mapped to a corresponding virtual lidar or radar. It is understood that further such mappings can be performed, e.g. from a plurality of sensors of one modality to one or more virtual sensors corresponding to that modality.

For example, a virtual camera can have predefined characteristics (e.g. focal length, principal point, position relative to the car coordinate system). The mapping from a physical camera to this virtual camera can be performed by getting the transformation from the physical to the virtual camera using the extrinsic and intrinsic matrices. In the case of radars, the virtual sensor can have a predefined field of view and perception range. Then, the physical radar signal is pre-processed and projected onto a 3D model space raster grid and this pre-processed signal is inserted into the virtual radar's bird's-eye-view grid (which might have a longer perception range and different angular resolution than the physical sensor). The physical-virtual lidar mapping works in a similar manner.

In certain embodiments, there may be only one virtual sensor, e.g. when we use several different cameras and one type of lidar. The different cameras are mapped onto a virtual camera sensor but the lidar can be used without virtualization since the same type of physical lidar is mounted to every recording car.

The method comprises a further step 130 of performing a second mapping from the virtual sensor data to a 3D model space.

The method comprises a last step 140 of training the neural network based on the virtual sensor data and one or more annotations in the 3D model space.

In the case of cameras, this (first) mapping can be created using a projective geometry and camera matrices ensuring invariance to translation and rotation. 3D sensing devices, on the other hand, typically emit their signal in model space by design. Due to this property, sensor virtualization can be executed using extrinsic matrices for providing translation and rotation invariance. The proper resolution matching between the original 3D sensors and virtual sensors can be ensured by scaling the input signals by a factor that can be obtained from the sensor configs. In this way, a sensor-agnostic perception system can be developed. That is, the need for training a separate model when a recording from a new sensor setup becomes accessible can be avoided.

Sensor virtualization enables the utilization of heterogeneous sensor setups for training a 360 degree perception model. However, it does not provide an efficient, end-to-end solution to train the above-mentioned model. The most frequently used method for implementing a 360-degree perception system is to train a separate model for each sensor modality and then combine them to form an environment model. This solution is time-consuming and expensive since training convolutional neural networks requires a substantial amount of power consumption and computation capacity.

Since the ground truth around the ego car is explicitly defined in the model (world) space and input sensors are mapped onto reference virtual sensors with known direction and field of view, it is beneficial to output the predictions in model space as a bird's-eye-view raster too. During training, the neural network can be fed by the signals from all sensors and the predictions are defined in model space, which is also how the ground truth is represented. In this way, all inputs can be processed together in one step.

The presented solution to improve efficiency is partially influenced by Siamese networks that use shared weights for two images. In the presented embodiment, a dedicated subnetwork is used for each sensor modality. For example, if the recording system has four pinhole cameras (front, back, left, right), only one backbone network is required for feature extraction. If fisheye cameras are part of the sensor setup, their input can either be used by the pinhole camera feature extractor network or a new, fisheye encoder network can be defined. The number of trainable network parameters can be reduced linearly by the number of sensors corresponding to the same sensor group.

Since the ground truth is preferably defined in 3D model space and we want to predict in 3D too, the camera features are transformed from 2D image space into 3D world space. The dimensionality increase mapping can be performed in several ways. One option is to utilize pseudo-lidar solutions. A preferred embodiment uses the encoder-decoder architecture. An encoder-decoder network comprises two subnetworks. The encoder is responsible for embedding the input into a latent space which is typically a smaller dimension space than the original input space. Then, the decoder network is fed by the encoded input and transforms it into the sought representation.

In a preferred embodiment, the encoder-decoder network is fed by camera images. The encoder is a convolutional neural network with asymmetric strides while the decoder uses transposed convolutions with asymmetric strides. As a first step, the encoder extracts relevant features from the image in a trainable manner. The transition from image space to model space can be further enhanced by a visual transformer using an attention mechanism where the transformer module learns which image features are attended to which model space features. The output of the decoder is the final raster representation of model space around the ego car, ensuring the bijective mapping between the ground truth and predictions.

Different sensors have inherently different signal representations. For example, a camera image is represented as a dense grid where every pixel has color values. A lidar's input is completely different from a camera image and can be represented as point clouds composed of X, Y, Z coordinates of reflectances and the intensity of the reflectances. Radars might have similar representations with additional velocity components. Both lidar and radar have a sparse representation compared to images. In addition, 3D sensing devices operate in model space by design while camera images live in a 2D space. In order to avoid the mixing of substantially different input representations, in a preferred embodiment one subnetwork is used for each sensor modality. The subnetworks are fed by input from different sensors without introducing uncertainty due to heterogeneous sensor input. The uncertainty is handled by means of sensor virtualization, i.e., mapping to virtual sensors.

Due to the sensor virtualization and known position and orientation of reference virtual sensors, the environment model is end-to-end trainable. A training step operates on a set of sensor inputs and the network outputs the predictions in model space. Every sensor-dedicated subnetwork is fed by the corresponding sensor inputs and outputs its feature maps in model space relative to the reference sensor. The 360-degree environment model can be obtained by appropriately positioning and concatenating the feature maps of the subnetworks to form a bird's eye view raster. For example, a back camera's feature map is positioned at the raster before the ego car. Similarly, a lidar's feature map that corresponds to the area behind the car can be concatenated to the feature maps of the back camera.

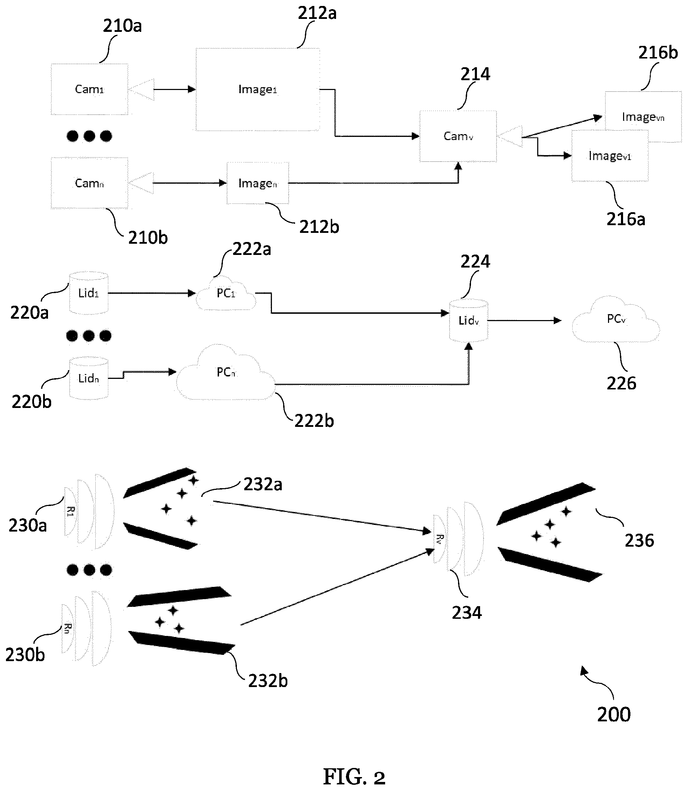

FIG. 2 is a block diagram that illustrates the first mapping from the physical sensors to the virtual sensor data.

The system 200 comprises the following physical sensors, a plurality of cameras 210a, 210b, a plurality of lidar sensors 220a, 220b, and a plurality of radar sensors 230a, 230b. In the shown embodiment, each of these are processed in a similar manner to arrive at virtual sensor data.

Images 212a, 212b that are obtained from the plurality of cameras 210a, 210b are processed by a virtual camera unit 214 to obtain virtual images 216a, 216b. The number of obtain virtual images 216a, 216b, may correspond to the number of physical images 210a, 210b, but in other embodiments may be completely different. The mapping that is performed in the virtual camera unit 214 may involve applying a geometric transformation to the physical images 210a, 210b, such as adjusting a field of view or a focal length and/or adjusting a geometric distortion. Also, the physical images 212a, 212b may have different resolutions and/or sizes compared to the virtual images 216a, 216b. The virtual images 216a, 216b are standardized and may be seen as canonized images.

The plurality of lidar sensors 220a, 220b generate physical lidar data 222a, 222b. These are processed by the virtual lidar module 224 to obtain virtual lidar data 226.

The plurality of radar sensor 230a, 230b generate physical radar data 232a, 232b. Preferably, a first lidar sensor 220a of the plurality of lidar sensors generates a first point cloud 222a and a second lidar sensor of the plurality of lidar sensors generates a second point cloud 222b. These are processed by the virtual radar module 234 to obtain virtual radar data 236.

The lidar and radar use cases are similar to the camera example. Physical sensors with different parameters (e.g. perception range, field of view) are mapped onto the virtual sensor. Since lidar and radar operate in model spaces, there is preferably only one combined virtual data. This can be seen in the case of the radar where the first radar sensor 230a generates 4 sensor signals in the first physical radar data 232a, the second physical radar sensor 230b generates 3 sensor signals in its second physical radar data 232b, and the virtual radar unit combines both physical signals into one virtual data with 4 signals.

Preferably, no hand-engineered fusion is necessary because the mapping has been performed already to the 3D model space.

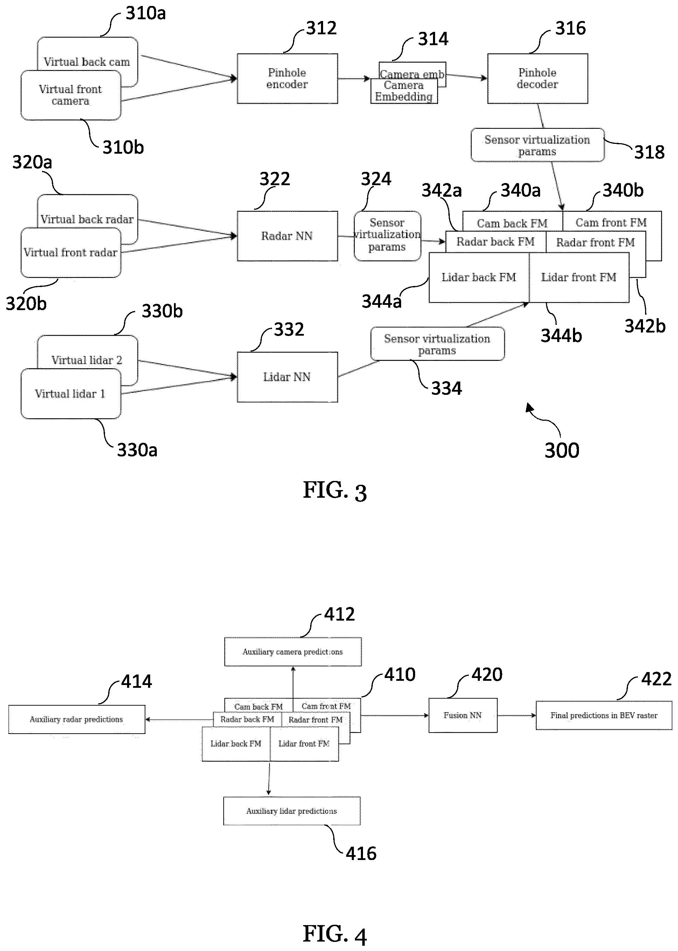

FIG. 3 illustrates the second mapping, from the virtual data to the feature maps in 3D model space.

Specifically, the system 300 shown in FIG. 3 receives as input (generated e.g. by the system 200 as shown in FIG. 2) virtual camera data, comprising data from a virtual back camera 310a and a virtual front camera 320b, virtual radar data, comprising data from a virtual back radar 320 and a virtual front radar 320b, and virtual lidar data, comprising data from a first virtual lidar 330a and a second virtual lidar 330b.

The camera data 310a, 310b are processed by a pinhole encoder 312 to obtain camera embeddings 314. These embeddings 314 are then processed by a pinhole decoder 316 to obtain sensor virtualization parameters 318 relating to the camera data. From these, feature maps 340a, 340b for the back and front camera are obtained.

Data from the virtual back radar 320a and the virtual front radar 320b are processed in the radar neural network 322 to obtain sensor virtualization parameters 234 that relate to the radar data. From these, the feature maps 342a, 342b for the back and front radars are obtained.

Similarly, data from the virtual lidars 330a, 330b are processed in a lidar neural network 332 to obtain sensor virtualization parameters 334 for the lidar data. From these feature maps 344a, 344b for the lidar sensor are obtained.

The neural networks 322, 332 can be trained using training data, where the virtual sensor data and the feature maps are available. Preferably, each feature map corresponds to one virtual sensor. Therefore, they can also be referred to as virtual sensor feature maps.

The sensor virtualization parameters may comprise parameters of the placement of the virtual sensor relative to the 3D models pace. This is known during training time and can be considered as an input for building the bird's-eye view feature map 410.

Since the first transformation has already transformed from the physical sensors to the virtual sensors the information about the physical placement of the physical sensor is no longer required at this stage. If the physical sensors comprise a front camera, then the virtual sensors will typically also comprise a front camera, however, the virtual camera could have a completely different field-of-view and even a different placement. Thus, the details of the placement of the physical front camera and the virtual front camera could be different and what matters at the generation of the feature map is the placement of the virtual camera.

For example, we know during the virtualization of a front camera that it looks forward. Therefore, we can insert the corresponding virtual feature maps to the appropriate place in the final bird's-eye view raster. If the virtual camera is a front camera, the feature map will start from the middle (i.e. from index (BEV raster width / 2)) of the bird's-eye view raster since the ego car is located in the origin and front camera perceives the environment in front of the ego car. If it is a back camera, the corresponding feature map will be inserted into the BEV raster starting from index o (which is behind the ego car).

The system 300 obtains feature maps that can then be processed further to obtain the estimated predictions.

FIG. 4 shows a flow chart of processing feature maps 410, e.g. feature maps as determined by the system of FIG. 3.

The feature maps 410 can be processed to obtain auxiliary camera predictions 412, auxiliary radar predictions 414 and/or auxiliary lidar predictions 416. Furthermore, the feature maps 410 are processed in a fusion neural network 420. This fusion neural network generates final predictions 422 in the 3D model space.

The 3D model space can be a bird's eye view raster, in particular a 306-degree bird's eye view raster. When the 360-degree bird's eye view raster storing the feature maps in model space is obtained, the prediction heads can be added. For example, one head is responsible for learning whether there is an object in a raster cell or not. At this point, the network can be trained. We have implemented heads as convolutional layers where the output channel size corresponds to the dimensionality of the predicted property. For example, the existence of an object within a raster cell is a convolutional layer with one output channel where the probability of objectness is predicted for each cell.

However, it is beneficial to apply a sensor fusion subnetwork on top of the 3D model space raster feature maps to train the network to properly combine features from different sensor modalities. In a preferred implementation, a lightweight CNN is utilized as the sensor fusion subnetwork. If the fusion subnetwork is used, auxiliary heads can be added to every virtual sensor model to facilitate training and the intermediate predictions can be concatenated (similar to the method mentioned in the previous section) to the input of the sensor fusion subnetwork. The auxiliary losses calculated for virtual sensor models are also added to the final loss that is computed to the full perception range (i.e., on the bird's eye view raster). The robustness of the perception system can further be improved by randomly turning off some of the sensors during training. This method is similar to dropout regularization except it masks sensor inputs instead of masking a set of neurons.

Preferably, the parameters of the neural networks 312, 322, 332 of the system 300 of FIG. 3 and trained together with the parameter of the fusion neural network 420, which can act as prediction heads. Furthermore, the first mapping from the physical sensor data to the virtual sensor data can also comprise parameters (e.g. parameter of further one or more neural networks) that can also be obtained in the same training process.

Thus, end-to-end training can be performed from the virtual sensor data (or starting from the original physical sensor data) to the final predictions.

## Claims

1. A method (100) for training a neural network (312, 322, 332, 420) to predict objects in a surrounding of a vehicle to compensate for a lack of physical sensor data or to transform physical sensor data, the method (100) comprising:
- obtaining (110) the physical sensor data from physical sensors having one or more modalities,
- performing (120) a first mapping of the physical sensor data to one or more virtual sensors to obtain virtual sensor data,
- performing (130) a second mapping from the virtual sensor data to a 3D model space comprising a bird's eye view raster, and
- training (140) the neural network (312, 322, 332, 420) based on the virtual sensor data and one or more annotations in the 3D model space.

2. The method (100) of claim 1, further comprising obtaining training data using a fleet of vehicles, wherein the fleet uses different physical sensors.

3. The method (100) of one of the previous claims, wherein the performing (120) the first mapping comprises applying a transformation from the physical sensor data to obtain the virtual sensor data, wherein the transformation is based on a difference between actual physical characteristics of the physical sensors and virtual physical characteristics of the virtual sensors.

4. The method (100) of one of the previous claims, wherein the 3D model space comprises a bird's eye view raster.

5. The method (100) of one of the previous claims, wherein the performing (130) the second mapping comprises that if a failure of a first sensor of the physical sensors is detected, the method (100) comprises filling in using virtual sensor data that is obtained from a second sensor of the physical sensors, wherein the first and second sensor use different modalities.

6. The method (100) of one of the previous claims, wherein the virtual sensors consist of one virtual sensor for each virtual modality.

7. The method (100) of one of the previous claims, further comprising a step of training parameters of an encoder (312) and a decoder (316) of a transformer model, wherein the encoder maps from the virtual sensor data to a latent space, and the decoder maps from the latent space to the 3D model space.

8. The method (100) of one of the previous claims, wherein the neural network (312, 322, 332, 420) comprises a feature mapping sub-network that maps from the virtual sensor data to a feature map (340a, 340b, 342a, 342b, 344a, 344b, 410) in the 3D model space, and a processing head that maps from the feature map (340a, 340b, 342a, 342b, 344a, 344b, 410) to an annotation space.

9. The method (100) of claim 8, wherein the one or more modalities comprise at least two modalities and the feature map (340a, 340b, 342a, 342b, 344a, 344b, 410) comprises a feature sub-map in the 3D model space for each of the at least two modalities, wherein preferably each feature sub-map feeds into the processing head.

10. The method (100) of one of the previous claims, wherein the one or more annotations comprise a presence of an object and/or a label of an object.

11. The method (100) of one of the previous claims, further comprising performing a fusion between the at least two modalities in the 3D model space.

12. The method (100) of one of the previous claims, wherein the training the neural network (312, 322, 332, 420) comprises training the neural network (312, 322, 332, 420) multiple times, where at least during one training data from one or more of the virtual sensors and/or the physical sensors is omitted.

13. The method (100) of one of the previous claims, wherein the first mapping comprises one or more first parameters, the second mapping comprises one or more second parameters, and a processing head for obtaining one or more annotations comprises one or more third parameters, wherein the training the neural network (312, 322, 332, 420) comprises end-to-end training to obtain the first, second and third parameters.

14. A system (200, 300) for training a neural network (312, 322, 332, 420) to predict objects in a surrounding of a vehicle, wherein the system (200, 300) is configured to carry out the method (100) of one of the previous claims.

15. A computer-readable storage medium storing program code, the program code comprising instructions that when executed by a processor carry out the method (100) of one of claims 1 to 13.

## Patentansprüche

1. Verfahren (100) zum Trainieren eines neuronalen Netzwerks (312, 322, 332, 420), um Objekte in einer Umgebung eines Fahrzeugs vorherzusagen, um einen Mangel an physikalischen Sensordaten zu kompensieren oder um physikalische Sensordaten zu transformieren, wobei das Verfahren (100) umfasst:
- Erhalten (110) der physikalischen Sensordaten von physikalischen Sensoren, die eine oder mehrere Modalitäten aufweisen,
- Durchführen (120) einer ersten Abbildung der physikalischen Sensordaten auf einen oder mehrere virtuelle Sensoren, um virtuelle Sensordaten zu erhalten,
- Durchführen (130) einer zweiten Abbildung von den virtuellen Sensordaten auf einen 3D-Modellraum, der ein Vogelperspektivenraster umfasst, und
- Trainieren (140) des neuronalen Netzwerks (312, 322, 332, 420) basierend auf den virtuellen Sensordaten und einer oder mehreren Anmerkungen in dem 3D-Modellraum.

2. Verfahren (100) nach Anspruch 1, ferner umfassend Erhalten von Trainingsdaten unter Verwendung einer Flotte von Fahrzeugen, wobei die Flotte verschiedene physikalische Sensoren verwendet.

3. Verfahren (100) nach einem der vorhergehenden Ansprüche, wobei das Durchführen (120) der ersten Abbildung Anwenden einer Transformation von den physikalischen Sensordaten umfasst, um die virtuellen Sensordaten zu erhalten, wobei die Transformation auf einer Differenz zwischen tatsächlichen physikalischen Eigenschaften der physikalischen Sensoren und virtuellen physikalischen Eigenschaften der virtuellen Sensoren basiert.

4. Verfahren (100) nach einem der vorhergehenden Ansprüche, wobei der 3D-Modellraum ein Vogelperspektivenraster umfasst.

5. Verfahren (100) nach einem der vorhergehenden Ansprüche, wobei das Durchführen (130) der zweiten Abbildung umfasst, dass, wenn ein Ausfall eines ersten Sensors der physikalischen Sensoren detektiert wird, das Verfahren (100) Auffüllen unter Verwendung von virtuellen Sensordaten umfasst, die von einem zweiten Sensor der physikalischen Sensoren erhalten werden, wobei der erste und der zweite Sensor verschiedene Modalitäten verwenden.

6. Verfahren (100) nach einem der vorhergehenden Ansprüche, wobei die virtuellen Sensoren aus einem virtuellen Sensor für jede virtuelle Modalität bestehen.

7. Verfahren (100) nach einem der vorhergehenden Ansprüche, ferner umfassend einen Schritt des Trainierens von Parametern eines Codierers (312) und eines Decodierers (316) eines Transformatormodells, wobei der Codierer von den virtuellen Sensordaten auf einen latenten Raum abbildet und der Decoder von dem latenten Raum auf den 3D-Modellraum abbildet.

8. Verfahren (100) nach einem der vorhergehenden Ansprüche, wobei das neuronale Netzwerk (312, 322, 332, 420) ein Merkmalsabbildungsteilnetzwerk, das von den virtuellen Sensordaten auf eine Merkmalsabbildung (340a, 340b, 342a, 342b, 344a, 344b, 410) in dem 3D-Modellraum abbildet, und einen Verarbeitungskopf, der von der Merkmalsabbildung (340a, 340b, 342a, 342b, 344a, 344b, 410) auf einen Anmerkungsraum abbildet, umfasst.

9. Verfahren (100) nach Anspruch 8, wobei die eine oder die mehreren Modalitäten mindestens zwei Modalitäten umfassen und die Merkmalsabbildung (340a, 340b, 342a, 342b, 344a, 344b, 410) eine Merkmalsteilabbildung in dem 3D-Modellraum für jede der mindestens zwei Modalitäten umfasst, wobei vorzugsweise jede Merkmalsteilabbildung in den Verarbeitungskopf eingespeist wird.

10. Verfahren (100) nach einem der vorhergehenden Ansprüche, wobei die eine oder die mehreren Anmerkungen ein Vorhandensein eines Objekts und/oder eine Kennzeichnung eines Objekts umfassen.

11. Verfahren (100) nach einem der vorhergehenden Ansprüche, ferner umfassend Durchführen einer Fusion zwischen den mindestens zwei Modalitäten in dem 3D-Modellraum.

12. Verfahren (100) nach einem der vorhergehenden Ansprüche, wobei das Trainieren des neuronalen Netzwerks (312, 322, 332, 420) mehrmaliges Trainieren des neuronalen Netzwerks (312, 322, 332, 420) umfasst, wobei mindestens während eines Trainingsdaten von einem oder mehreren der virtuellen Sensoren und/oder der physikalischen Sensoren ausgelassen wird.

13. Verfahren (100) nach einem der vorhergehenden Ansprüche, wobei die erste Abbildung einen oder mehrere erste Parameter umfasst, die zweite Abbildung einen oder mehrere zweite Parameter umfasst und ein Verarbeitungskopf zum Erhalten einer oder mehrerer Anmerkungen einen oder mehrere dritte Parameter umfasst, wobei das Trainieren des neuronalen Netzwerks (312, 322, 332, 420) Ende-zu-Ende-Training umfasst, um die ersten, zweiten und dritten Parameter zu erhalten.

14. System (200, 300) zum Trainieren eines neuronalen Netzwerks (312, 322, 332, 420), um Objekte in einer Umgebung eines Fahrzeugs vorherzusagen, wobei das System (200, 300) konfiguriert ist, um das Verfahren (100) nach einem der vorhergehenden Ansprüche auszuführen.

15. Computerlesbares Speichermedium, das Programmcode speichert, wobei der Programmcode Anweisungen umfasst, die, wenn sie von einem Prozessor ausgeführt werden, das Verfahren (100) nach einem der Ansprüche 1 bis 13 ausführen.

## Revendications

1. Procédé (100) d'entraînement d'un réseau neuronal (312, 322, 332, 420) pour prédire des objets dans un environnement d'un véhicule pour compenser un manque de données de capteur physique ou pour transformer des données de capteur physique, le procédé (100) comprenant :
- l'obtention (110) des données de capteur physique à partir de capteurs physiques ayant une ou plusieurs modalités,
- la réalisation (120) d'une première mise en correspondance des données de capteur physique avec un ou plusieurs capteurs virtuels pour obtenir des données de capteur virtuel,
- la réalisation (130) d'une seconde mise en correspondance à partir des données de capteur virtuel avec un espace de modèle 3D comprenant une trame de vue à vol d'oiseau, et
- l'entraînement (140) du réseau neuronal (312, 322, 332, 420) sur la base des données de capteur virtuel et d'une ou plusieurs annotations dans l'espace de modèle 3D.

2. Procédé (100) selon la revendication 1, comprenant en outre l'obtention de données d'entraînement en utilisant une flotte de véhicules, dans lequel la flotte utilise différents capteurs physiques.

3. Procédé (100) selon l'une des revendications précédentes, dans lequel la réalisation (120) de la première mise en correspondance comprend l'application d'une transformation à partir des données de capteur physique pour obtenir les données de capteur virtuel, dans lequel la transformation est basée sur une différence entre des caractéristiques physiques réelles des capteurs physiques et des caractéristiques physiques virtuelles des capteurs virtuels.

4. Procédé (100) selon l'une des revendications précédentes, dans lequel l'espace de modèle 3D comprend une trame de vue à vol d'oiseau.

5. Procédé (100) selon l'une des revendications précédentes, dans lequel la réalisation (130) de la seconde mise en correspondance comprend que si une défaillance d'un premier capteur des capteurs physiques est détectée, le procédé (100) comprend le remplissage en utilisant des données de capteur virtuel qui sont obtenues à partir d'un second capteur des capteurs physiques, dans lequel les premier et second capteurs utilisent différentes modalités.

6. Procédé (100) selon l'une des revendications précédentes, dans lequel les capteurs virtuels sont constitués d'un capteur virtuel pour chaque modalité virtuelle.

7. Procédé (100) selon l'une des revendications précédentes, comprenant en outre une étape d'entraînement de paramètres d'un codeur (312) et d'un décodeur (316) d'un modèle de transformateur, dans lequel le codeur met en correspondance à partir des données de capteur virtuel avec un espace latent, et le décodeur met en correspondance à partir de l'espace latent avec l'espace de modèle 3D.

8. Procédé (100) selon l'une des revendications précédentes, dans lequel le réseau neuronal (312, 322, 332, 420) comprend un sous-réseau de mise en correspondance de caractéristiques qui met en correspondance des données de capteur virtuel avec une carte de caractéristiques (340a, 340b, 342a, 342b, 344a, 344b, 410) dans l'espace de modèle 3D, et une tête de traitement qui met en correspondance la carte de caractéristiques (340a, 340b, 342a, 342b, 344a, 344b, 410) avec un espace d'annotations.

9. Procédé (100) selon la revendication 8, dans lequel les une ou plusieurs modalités comprennent au moins deux modalités et la carte de caractéristiques (340a, 340b, 342a, 342b, 344a, 344b, 410) comprend une sous-carte de caractéristiques dans l'espace de modèle 3D pour chacune des au moins deux modalités, dans lequel de préférence chaque sous-carte de caractéristiques alimente la tête de traitement.

10. Procédé (100) selon l'une des revendications précédentes, dans lequel les une ou plusieurs annotations comprennent une présence d'un objet et/ou une étiquette d'un objet.

11. Procédé (100) selon l'une des revendications précédentes, comprenant en outre la réalisation d'une fusion entre les au moins deux modalités dans l'espace de modèle 3D.

12. Procédé (100) selon l'une des revendications précédentes, dans lequel l'entraînement du réseau neuronal (312, 322, 332, 420) comprend l'entraînement du réseau neuronal (312, 322, 332, 420) de multiples fois où, au moins pendant un entraînement, des données provenant d'un ou plusieurs des capteurs virtuels et/ou des capteurs physiques sont omises.

13. Procédé (100) selon l'une des revendications précédentes, dans lequel la première mise en correspondance comprend un ou plusieurs premiers paramètres, la deuxième mise en correspondance comprend un ou plusieurs deuxièmes paramètres, et une tête de traitement pour obtenir une ou plusieurs annotations comprend un ou plusieurs troisièmes paramètres, dans lequel l'entraînement du réseau neuronal (312, 322, 332, 420) comprend un entraînement de bout en bout pour obtenir les premier, deuxième et troisième paramètres.

14. Système (200, 300) d'entraînement d'un réseau neuronal (312, 322, 332, 420) pour prédire des objets dans un environnement d'un véhicule, dans lequel le système (200, 300) est configuré pour réaliser le procédé (100) selon l'une des revendications précédentes.

15. Support de stockage lisible par ordinateur stockant un code de programme, le code de programme comprenant des instructions qui, lorsqu'elles sont exécutées par un processeur, réalisent le procédé (100) selon l'une des revendications 1 à 13.
